(19) Europäisches Patentamt
European Patent Office
Office européen des brevets

(11) **EP 3 844 377 B1**

(12) **FASCICULE DE BREVET EUROPEEN**

(45) Date de publication et mention
de la délivrance du brevet:
**20.03.2024   Bulletin 2024/12**

(21) Numéro de dépôt: **19753147.8**

(22) Date de dépôt: **09.07.2019**

(51) Classification Internationale des Brevets (IPC):
***F02D 41/14*** *(2006.01)*      ***F02D 41/00*** *(2006.01)*

(52) Classification Coopérative des Brevets (CPC):
**F02D 41/0007; F02D 41/1401; F02D 41/1446;
F02D 41/1448;** F02B 37/18; F02B 37/24;
F02D 2041/1409; F02D 2041/1433;
F02D 2200/0402; Y02T 10/12

(86) Numéro de dépôt international:
**PCT/FR2019/051706**

(87) Numéro de publication internationale:
**WO 2020/043964 (05.03.2020 Gazette 2020/10)**

(54) **PROCEDE DE CALCUL D'UNE POSITION DE CONSIGNE D'UN TURBOCOMPRESSEUR DE MOTEUR THERMIQUE**

VERFAHREN ZUR BERECHNUNG EINES SOLLWERTS EINES
WÄRMEKRAFTMASCHINENTURBOLADERS

METHOD FOR CALCULATING A SETPOINT POSITION OF A HEAT ENGINE TURBOCHARGER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **29.08.2018  FR 1857767**

(43) Date de publication de la demande:
**07.07.2021   Bulletin 2021/27**

(73) Titulaire: **Stellantis Auto SAS
78300 Poissy (FR)**

(72) Inventeurs:
• **FOSSE, Florent
93340 LE RAINCY (FR)**
• **ACHIR, Ali
78955 CARRIERES SOUS POISSY (FR)**

(56) Documents cités:
**EP-A1- 1 936 155       DE-A1-102004 051 837
DE-B3-102014 217 456    FR-A1- 2 921 114**

**Description**

La présente invention porte sur un procédé de calcul d'une position de consigne d'un turbocompresseur de moteur thermique. L'invention trouve une application particulièrement avantageuse, mais non exclusive, dans le domaine des moteurs thermiques de véhicules automobiles.

De façon connue en soi, un turbocompresseur comporte un compresseur et une turbine reliée mécaniquement au compresseur. Le compresseur comprime l'air d'admission afin d'optimiser le remplissage des chambres de combustion. A cet effet, le compresseur est placé sur le conduit d'admission de l'air, c'est-à-dire avant le moteur. L'écoulement des gaz d'échappement entraîne en rotation la turbine qui entraîne alors en rotation le compresseur par l'intermédiaire d'un arbre d'accouplement reliant les éléments entre eux.

Un turbocompresseur comporte une turbine du type à géométrie fixe (TGF) ou à géométrie variable (TGV). Un turbocompresseur à géométrie fixe comporte une soupape de décharge permettant à une partie des gaz d'échappement de ne pas passer par la turbine. Un turbocompresseur à géométrie variable présente des ailettes permettant de faire varier la section de passage des gaz d'échappement. Une consigne de position du turbocompresseur (la position de la soupape de décharge pour le turbocompresseur à géométrie fixe ou la position des ailettes pour le turbocompresseur à géométrie variable) permet d'atteindre la consigne de pression de suralimentation.

Ccette consigne de position est généralement élaborée à partir des équations de base régissant le fonctionnement de la turbine. Cette façon de procéder engendre implicitement un bouclage avec la position de la turbine courante. Cela implique plusieurs inconvénients, notamment le manque de précision, d'homogénéité, ainsi que des difficultés de calibration. En effet, la complexité de ce calcul et la présence de ce bouclage ne permettent pas d'atteindre ou d'améliorer la précision en ciblant judicieusement les paramètres mis en jeux tels que les champs turbine, le rendement turbine, ou la section efficace de passage des gaz dans le cas d'une soupape de décharge. Par conséquent, l'erreur commise par cette méthode est inhomogène en fonction des conditions d'utilisation de la turbine.

On connait encore du document DE102004051837A1 une méthode de contrôle d'un turbocompresseur.

L'invention vise à remédier efficacement à ces inconvénients en proposant un procédé de calcul d'une position de consigne d'un turbocompresseur de moteur thermique muni d'un compresseur et d'une turbine destinée à être entraînée par des gaz d'échappement, caractérisé en ce que le procédé comporte:

- une étape de détermination d'une puissance adaptée $P_{adapt}$ déterminée à partir de la formule suivante:

$$P_{adapt} = \frac{P_{comp}}{P_4\sqrt{T_3}}$$

Avec $P_{comp}$ une puissance envoyée au compresseur; $P_4$ une pression en aval de la turbine; $T_3$ une température en amont de la turbine,
- une étape de détermination d'un débit adapté $Q_{adapt}$ déterminé à partir de la formule suivante:

$$Q_{adapt} = Q_{ech}\frac{\sqrt{T_3}}{P_4}$$

Avec $Q_{ech}$ un débit de gaz d'échappement;
- une étape de détermination de la position de consigne du turbocompresseur à partir de la puissance adaptée $P_{adapt}$ et du débit adapté $Q_{adapt}$, et
- une étape de pilotage du turbocompresseur en fonction de la position de consigne précédemment déterminée.

L'invention permet ainsi, en utilisant une pression de sortie de la turbine, de supprimer le bouclage avec la position courante du turbocompresseur qui est source d'erreur de calcul. En outre, grâce à l'invention, la nouvelle consigne de position de la turbine recherchée est obtenue simplement à partir d'un champ unique dépendant de deux variables d'entrée uniquement. Cette réduction de variables d'entrée facilite la calibration du procédé. L'invention est basée sur un principe générique adapté à un turbocompresseur à géométrie fixe (TGF) ou variable (TGV).

Selon une mise en oeuvre, une relation entre la position de consigne du turbocompresseur et un couple puissance adaptée $P_{adapt}$-débit adapté $Q_{adapt}$ est obtenue à partir d'essais moteur.

Selon une mise en oeuvre, une relation entre la position de consigne du turbocompresseur et un couple puissance adaptée $P_{adapt}$-débit adapté $Q_{adapt}$ est obtenue à partir de données fonctionnelles de la turbine du turbocompresseur.

Selon une mise en oeuvre, le turbocompresseur comporte une turbine à géométrie variable.

Selon une mise en oeuvre avec une turbine à géométrie variable, la position de consigne est la position de consigne des ailettes de la turbine.

Selon une mise en oeuvre, le turbocompresseur comporte une turbine à géométrie fixe.

Selon une mise en oeuvre avec une turbine à géométrie fixe, la position de consigne est la position de consigne d'une soupape de décharge du turbocompresseur.

L'invention a également pour objet un calculateur moteur comportant une mémoire stockant des instructions logicielles pour la mise en oeuvre du procédé de calcul d'une position de consigne d'un turbocompresseur de moteur thermique tel que précédemment défini.

L'invention a également pour objet un véhicule automobile caractérisé en ce qu'il comporte un calculateur moteur tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une architecture de véhicule automobile avec laquelle est mis en oeuvre un procédé selon l'invention de calcul d'une position de consigne d'un turbocompresseur de moteur thermique;

La figure 2 est un diagramme d'une loi de commande de suralimentation avec bouclage sur l'estimation de la pression en entrée de la turbine;

Les figures 3 et 4 sont des représentations graphiques de caractéristiques fonctionnelles de rendement et de perméabilité de la turbine pour une position donnée du turbocompresseur;

La figure 5 est une représentation graphique de la perméabilité de la turbine en fonction d'un taux de détente;

La figure 6 est un diagramme de la loi de commande du calcul de la position du turbocompresseur selon l'invention;

Les figures 7 et 8 montrent des courbes à iso-taux de détente de la turbine et iso-position du turbocompresseur dans un champ puissance adaptée/débit adapté pour un turbocompresseur respectivement à géométrie fixe et à géométrie variable;

Les figures 9 et 10 sont des représentations graphiques de l'erreur de pression de suralimentation en fonction du point de fonctionnement régime-puissance obtenue respectivement avec un procédé selon l'état de la technique et un procédé selon l'invention.

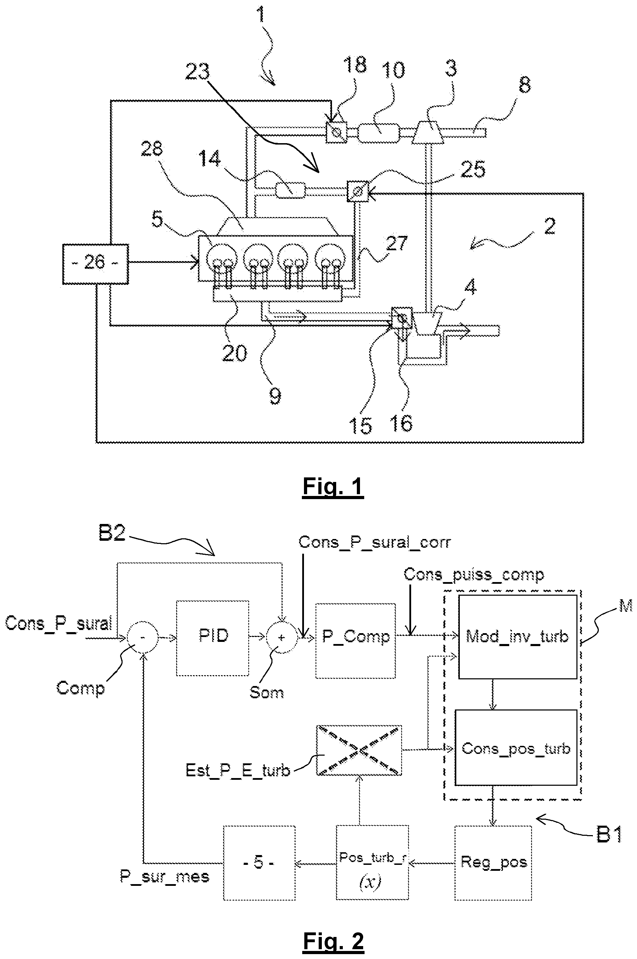

La figure 1 montre un exemple d'architecture de véhicule automobile 1 comportant un moteur thermique 5 suralimenté par un turbocompresseur 2 comprenant un compresseur 3 et une turbine 4. Le compresseur 3 permet de comprimer l'air d'admission de manière à optimiser le remplissage des cylindres du moteur 5. A cet effet, le compresseur 3 est disposé sur une conduite d'admission 8 en amont du moteur 5. L'écoulement des gaz d'échappement entraîne en rotation la turbine 4 disposée sur une conduite d'échappement 9, laquelle entraîne alors en rotation le compresseur 3 par l'intermédiaire d'un arbre d'accouplement.

Dans le cas d'un turbocompresseur 2 ayant une turbine 4 à géométrie fixe, une vanne de décharge 15 permet de gérer la quantité de gaz d'échappement circulant à travers la turbine 4 et la quantité de gaz passant par une conduite de décharge 16. Alternativement, le turbocompresseur 2 muni d'une turbine 4 à géométrie variable comporte des ailettes permettant de faire varier la section de passage des gaz d'échappement.

De manière à maintenir la densité de l'air acquise en sortie du compresseur 3, on utilise un échangeur de chaleur 10 dit RAS (pour "Refroidisseur d'Air de Suralimentation") apte à refroidir l'air circulant dans la conduite d'admission 8. L'échangeur 10 est monté en aval du compresseur 3 et en amont d'un doseur d'air 18.

Par ailleurs, un système 23 de recirculation des gaz d'échappement (dit "EGR" pour "Exhaust Gaz Recirculation" en anglais) comporte une conduite de redirection 27 des gaz d'échappement apte à rediriger une partie des gaz d'échappement issus d'un collecteur d'échappement 20 vers le répartiteur d'admission 28 du moteur 5 après passage dans un échangeur 14. Ainsi, une partie des gaz d'échappement du moteur 5 est rejetée vers l'extérieur du véhicule automobile à travers la conduite d'échappement 9 et une autre partie des gaz est recyclée. La quantité de gaz devant être remise en circulation est contrôlée par la vanne EGR 25 montée en amont du répartiteur d'admission 28.

Un calculateur moteur 26 est apte à piloter les différents organes du véhicule, en particulier l'injection du moteur thermique 5, la turbine 4 du turbocompresseur 2, le doseur d'air 18, et la vanne EGR 25. Ce calculateur 26 comporte une mémoire stockant des instructions logicielles pour la mise en oeuvre du procédé selon l'invention de calcul d'une position de consigne du turbocompresseur 2.

La figure 2 montre un schéma de commande de la pression de suralimentation d'un moteur thermique 5. Il intègre deux boucles de régulation de type PID (Pour "Proportionnel, Intégral, Dérivé"). La première boucle B1 (interne) régule la position du turbocompresseur 2 à géométrie fixe ou variable. La deuxième boucle (externe) B2 régule la pression de suralimentation. Ce système de commande suppose la mesure de la pression de suralimentation P_sur_mes du moteur thermique 5 ainsi que la position du turbocompresseur Pos_turb (x). Cette dernière permet de mesurer la levée de la tige de l'actionneur pilotant soit la vanne de décharge 15 ou les ailettes du turbocompresseur 2 à géométrie variable.

Plus précisément, un comparateur Comp permet de calculer une erreur entre la consigne de pression de suralimentation Cons_P_sural et la pression de suralimentation mesurée P_sur_mes. Un bloc de régulation PID corrige cette erreur et le résultat est ajouté à la consigne de pression de suralimentation Cons_P_sural via le sommateur Som.

Le système de suralimentation est non-linéaire. Cette non-linéarité est notamment intrinsèque au turbocompresseur 2. Afin de linéariser ce système vis-à-vis du régulateur, un modèle inverse de ce dernier est intégré dans la loi de commande.

Le module P_Comp détermine ainsi à partir de la consigne de pression de suralimentation corrigée Cons_P_sural_corr la puissance de compresseur requise Cons_puiss_comp. Ensuite, cette dernière est traduite en consigne de perméabilité de la soupape de décharge via le modèle inverse de la turbine Mod_inv_turb. Enfin, cette perméabilité est convertie à son tour en consigne de position de turbocompresseur via le modèle Cons_pos_turb.

Cette inversion nécessite de connaitre la pression en amont de la turbine Est_P_E_turb. Or pour la connaitre, il faut connaitre la position réelle du turbocompresseur Pos_turb, elle-même déterminée par la consigne de la position Cons_pos_turb. Il y a donc un bouclage, via un bloc de régulation Reg_pos, de type PID, au niveau de la consigne de position Cons_pos_turb du turbocompresseur 2.

Afin de supprimer ce bouclage, l'invention modifie la structure de consigne de position Cons_pos_turb du turbocompresseur 2 et le modèle inverse de la puissance de la turbine Mod_inv_turb du module M.

On détaille ci-après la nouvelle structure d'inversion de la puissance de la turbine et de calcul de la consigne de position du turbocompresseur 2.

Les différentes variables utilisées dans les différents calculs sont définies dans le tableau ci-dessous :

| Notation | Définition |
|---|---|
| $P_{turb}$ | Puissance récupérée par la turbine |
| $P_{comp}$ | Puissance envoyée au compresseur |
| $N$ | Régime du turbocompresseur |
| $N_{mot}$ | Régime moteur |
| $N_{red}$ | Régime réduit turbine |
| $Q_{comp}$ | Débit compresseur |
| $Q_{remp}$ | Débit moteur |
| $Q_{red}$ | Débit réduit turbine |
| $Q_{turb}$ | Débit turbine |
| $Q_{ech}$ | Débit échappement |
| $Q_{WG}$ | Débit de la vanne de décharge |
| $Q_{carb}$ | Débit carburant |
| $R$ | Constante des gaz parfait |
| $T_3$ | Température amont turbine |
| $T_{3t}$ | Température amont turbine (totale) |
| $P_4$ | Pression aval turbine |
| $P_3$ | Pression amont turbine |

(suite)

| Notation | Définition |
|----------|-----------|
| $P_{3t}$ | Pression amont turbine (totale) |
| $\eta_T$ | Rendement turbine |
| $c_p$ | Capacité calorifique des gaz échappement |
| $\pi_T$ | Taux de détente turbine |
| $\gamma$ | Coefficient adiabatique des gaz échappement |
| $S_{eff}$ | Section efficace de la vanne de décharge |
| $x$ | Position du turbocompresseur |

Dans la suite de la description, les hypothèses suivantes sont faites :

- la température d'échappement totale est considérée connue et est égale à la température d'échappement statique :

$$T_{3t} \simeq T_3 \qquad (1)$$

- la puissance du compresseur est connue. Cette dernière est obtenue via l'équation suivante :

$$P_{comp} = Q_{comp} \cdot c_p \cdot \frac{T_1}{\eta_c} \cdot \left( \pi_c^{\frac{\gamma-1}{\gamma}} - 1 \right) \qquad (2)$$

- la turbine 4 se caractérise complètement par les données fonctionnelles suivantes :

- la perméabilité :

$$Q_{red} = f(\pi_T, N_{red}, x) \qquad (3)$$

- le rendement :

$$\eta_T = f(\pi_T, N_{red}, x) \qquad (4)$$

avec :

$$Q_{red} = Q \frac{\sqrt{T_3}}{P_{3t}} \text{ et } N_{red} = \frac{N}{\sqrt{T_3}}$$

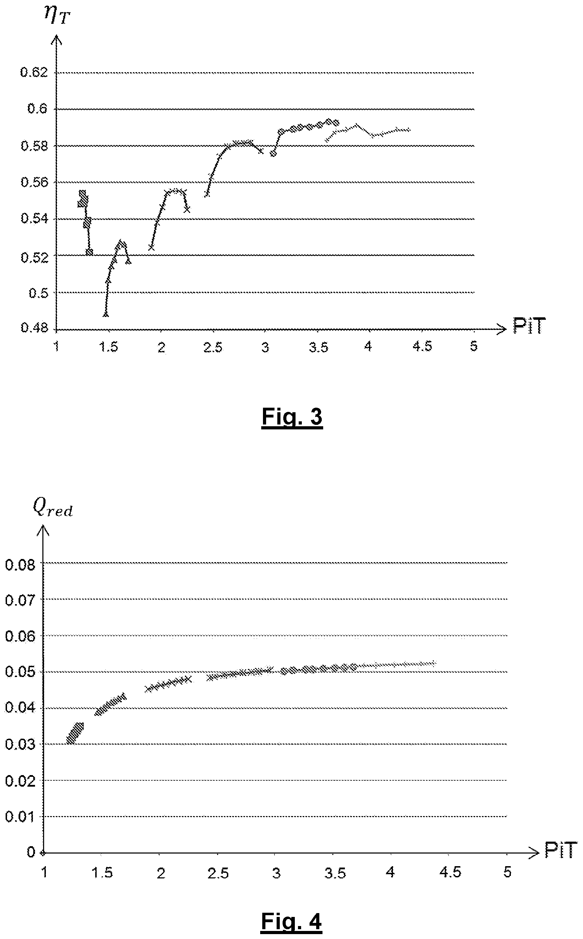

Les figures 3 et 4 montrent des caractéristiques fonctionnelles du rendement $\eta_T$ et de la perméabilité $Q_{red}$ de la turbine 4 pour une position de turbocompresseur donnée. Chaque courbe représente un iso-régime réduit de turbine $N_{red}$.

Afin d'introduire la nouvelle approche de calcul de la consigne de position Cons_pos_turb du turbocompresseur 2, on exploite la donnée suivante : à une position de turbocompresseur 2 donnée (TGV ou TGF), et pour un iso-régime du turbocompresseur 2 donné, l'équilibrage des puissances du compresseur 3 et de la turbine 4 impose l'unicité du point d'équilibre entre le compresseur 3 et la turbine 4. Par conséquent, on ne retient qu'une seule valeur de rendement par iso-régime du turbocompresseur 2.

Les caractéristiques fonctionnelles de la turbine (3) et (4) deviennent donc :

- la perméabilité :

$$Q_{red} = f(\pi_T, x) \qquad (5)$$

- le rendement :

$$\eta_T = f(\pi_T, x) \qquad (6)$$

Avec :

$$Q_{red} = Q \frac{\sqrt{T_3}}{P_{3t}}$$

Les propriétés des gaz sont constantes et considérées indépendantes de la température :

$$c_{p\_gaz} = c_{p\_air} = c_p$$

$$\gamma_{gaz} = \gamma_{gaz} = \gamma$$

On définit les variables suivantes :

Puissance adaptée :

$$P_{adapt} = \frac{P_{turb}}{P_4\sqrt{T_3}} \qquad (7)$$

Avec $P_{turb}$ :

$$P_{turb} = Q_{turb}.c_p.T_{3t}.\eta_T.\left(1 - \pi_T^{\frac{1-\gamma}{\gamma}}\right) \qquad (8)$$

En régime stabilisé (c'est-à-dire à vitesse de turbocompresseur 2 constante), comme $P_{turb} = P_{comp}$, on a donc :

$$P_{adapt} = \frac{P_{comp}}{P_4\sqrt{T_3}} \qquad (9)$$

Le débit adapté s'exprime de la façon suivante :

$$Q_{adapt} = Q_{ech}\frac{\sqrt{T_3}}{P_4} \qquad (10)$$

Avec :

$$Q_{ech} = Q_{remp} + Q_{carb} = \begin{cases} Q_{turb} + Q_{WG} & \text{pour une TGF} \\ Q_{turb} & \text{pour une TGV} \end{cases} \qquad (11)$$

Pour le calcul de la puissance adaptée $P_{adapt}$, en remplaçant (8) dans (7) et en multipliant et en divisant par

$P_{3t}$ pour faire apparaître le taux de détente de la turbine 4 ($\pi_T = P_{3t}/P_4$), on obtient :

$$P_{adapt} = \frac{Q_{turb}.c_p.T_3.\eta_T.\left(1 - \pi_T^{\frac{1-\gamma}{\gamma}}\right)}{P_4\sqrt{T_3}}\frac{P_{3t}}{P_{3t}} \qquad (12)$$

En réorganisant les différents termes de l'équation (12), on fait apparaitre également la perméabilité de la turbine $Q_{red} = Q_{turb}\frac{\sqrt{T_3}}{P_{3t}}$ , et on obtient :

$$P_{adapt} = \frac{Q_{turb}\sqrt{T_3}}{P_{3t}}c_p.T_3.\eta_T.\pi_T\left(1 - \pi_T^{\frac{1-\gamma}{\gamma}}\right) \qquad (13)$$

Il suit :

$$P_{adapt} = Q_{red}.c_p.\eta_T.\pi_T\left(1 - \pi_T^{\frac{1-\gamma}{\gamma}}\right) \qquad (14)$$

Selon les équations (5) et (6), on en déduit finalement la relation :

$$P_{adapt} = g(\pi_T, x) \qquad (15)$$

On constate donc que la puissance de la turbine adaptée $P_{adapt}$ dépend uniquement de la détente et de la position de la turbine 4.

Pour le calcul du débit de la turbine adapté $Q_{adapt}$, à partir des équations (10) et (11) et en multipliant et en divisant à nouveau par $P_{3t}$ pour faire apparaitre le taux de détente de la turbine ($\pi_T = P_{3t}/P_4$) , on obtient :

$$Q_{adapt} = Q_{ech}\frac{\sqrt{T_3}}{P_4}\frac{P_{3t}}{P_{3t}} \qquad (16)$$

Afin d'expliciter le débit d'échappement $Q_{ech}$, on distingue deux cas. Dans le cas d'une turbine à géométrie variable (TGV), en remplaçant l'équation (11) dans (16), on fait apparaitre la perméabilité de la turbine $Q_{red} = Q_{turb}\frac{\sqrt{T_3}}{P_{3t}}$ :

$$Q_{adapt} = \left(Q_{turb}\frac{\sqrt{T_3}}{P_{3t}}\right)\pi_T \qquad (18)$$

Il suit :

$$Q_{adapt} = Q_{red}\,\pi_T \qquad (19)$$

Selon l'équation (5), on obtient finalement :

$$Q_{adapt} = h_1(\pi_T, x) \qquad (20)$$

On constate également que le débit de la turbine adapté $Q_{adapt}$ dépend uniquement de la détente et de la position de la turbine 4.

Dans le cas d'une turbine 4 à géométrie fixe (TGF), à partir des équations (10), (11) et en multipliant et en divisant à nouveau par $P_{3t}$ pour faire apparaitre le taux de détente de la turbine ($\pi_T = P_{3t}/P_4$), on obtient :

$$Q_{adapt} = \left( Q_{turb} \frac{\sqrt{T_3}}{P_4} \frac{P_{3t}}{P_{3t}} + Q_{WG} \frac{\sqrt{T_3}}{P_4} \frac{P_{3t}}{P_{3t}} \right) \qquad (21)$$

Selon l'équation de Barré Saint Venant, le débit de la vanne de décharge $Q_{WG}$ s'écrit :

$$Q_{WG} = S_{eff}(x) \frac{P_{3t}}{\sqrt{R.T_3}} \left(\frac{1}{\pi_T}\right)^{\frac{1}{\gamma}} \left[ \frac{\gamma}{\gamma - 1} \left( 1 - \left(\frac{1}{\pi_T}\right)^{\frac{\gamma-1}{\gamma}} \right) \right]^{\frac{1}{2}} \qquad (22)$$

D'où en multipliant par $\dfrac{\sqrt{T_3}}{P_{3t}}$ :

$$Q_{WG} \frac{\sqrt{T_3}}{P_{3t}} = S_{eff}(x) \frac{1}{\sqrt{R}} \left(\frac{1}{\pi_T}\right)^{\frac{1}{\gamma}} \left[ \frac{\gamma}{\gamma - 1} \left( 1 - \left(\frac{1}{\pi_T}\right)^{\frac{\gamma-1}{\gamma}} \right) \right]^{\frac{1}{2}} \qquad (23)$$

On constate donc que le terme de gauche de l'équation (23) est fonction de la position de la vanne de décharge ainsi que de la détente de la turbine 4 :

$$Q_{WG} \frac{\sqrt{T_3}}{P_{3t}} = S_{eff}(x).h_{12}(\pi_T) \qquad (24)$$

Par ailleurs, selon les équations (18), (19) et (20), nous avons :

$$Q_{turb} \frac{\sqrt{T_3}}{P_4} \frac{P_{3t}}{P_{3t}} = Q_{red}\, \pi_T = h_{22}(\pi_T, x) \qquad (25)$$

En remplaçant (24) et (25) dans (21), on obtient :

$$Q_{adapt} = h_{22}(\pi_T, x) + S_{eff}(x).h_{12}(\pi_T)\pi_T \qquad (26)$$

On constate alors que :

$$Q_{adapt} = h_2(\pi_T, x) \qquad (27)$$

est fonction de la détente et de la position de la turbine 4.

Finalement on montre que, quelle que soit la technologie de turbocompresseur 2 (TGV ou TGF), on a :

$$\begin{cases} P_{adap} = g(\pi_T, x) \\ Q_{adap} = \begin{cases} h_1(\pi_T, x) \text{ cas TGV} \\ h_2(\pi_T, x) \text{ cas TGF} \end{cases} = h(\pi_T, x) \text{ cas } TGF/TGV \end{cases} \qquad (28)$$

Le système d'équations (28) est un système d'équations non linéaires à deux inconnues. Il admet une solution unique si et seulement si les fonctions g et h sont strictement monotones.

Pour une position du turbocompresseur donnée $x_0$, on peut montrer que la fonction $P_{adapt} = g(\pi_T, x_0)$ est strictement croissante :

$$P_{adapt} = Q_{red}(\pi_T, x_0).c_p.\eta_T(\pi_T, x_0).\pi_T(1 - \pi_T^{\frac{1-\gamma}{\gamma}}) \qquad (29)$$

En effet, $Q_{red}(\pi_T, x_0)$ et $\pi_T(1 - \pi_T^{\frac{1-\gamma}{\gamma}})$ sont des fonctions croissantes en fonction de $\pi_T$, et $\eta_T(\pi_T, x_0)$ varie peu en fonction de $\pi_T$.

On peut donc inverser la fonction g selon :

$$\pi_T = g^{-1}(P_{adapt}, x_0) \qquad (30)$$

On réinjecte ensuite cette expression dans la fonction g :

$$Q_{adapt} = h(g^{-1}(P_{adapt}, x_0), x_0) \qquad (31)$$

De la même façon, on montre que pour une position du turbocompresseur donnée $x_0$, la fonction $Q_{adapt} = h(\pi_T, x_0)$ qui s'apparente à la perméabilité de la turbine 4 est strictement croissante.

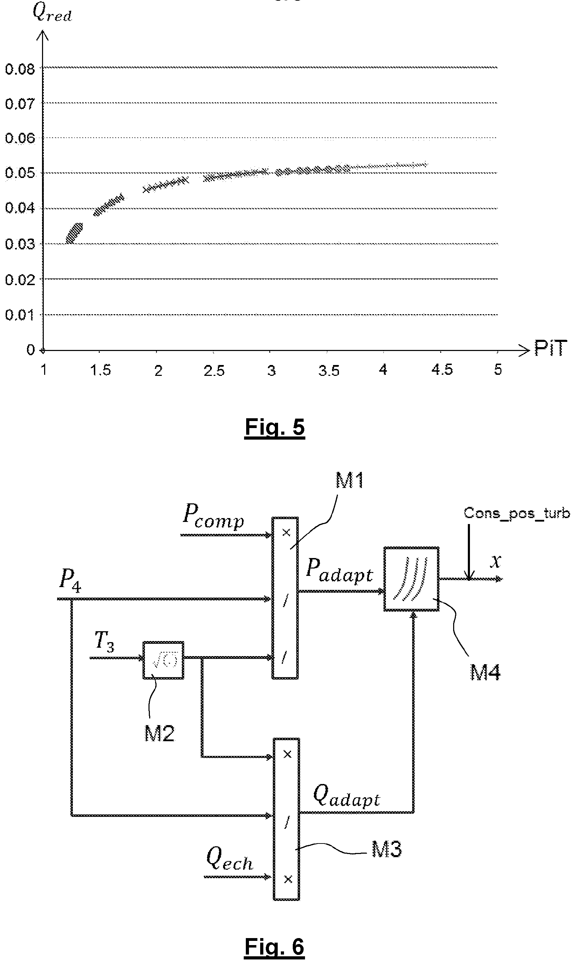

La figure 5 montre ainsi que la perméabilité de la turbine est une fonction croissante en fonction du taux de détente $\pi_T$.

Finalement, les fonctions $g$ et $h$ étant inversibles, on peut exprimer la position du turbocompresseur $x_0$ en fonction de la puissance et débit adaptés :

$$x_0 = \Phi(P_{adapt}, Q_{adapt}) \qquad (32)$$

Donc connaissant la puissance adaptée $P_{adapt}$ et le débit adapté $Q_{adapt}$, on peut en déduire la position du turbocompresseur Cons_pos_turb.

La figure 6 montre les différents modules logiciels pouvant être implémentés dans le calculateur moteur 26 pour effectuer le calcul de la position de consigne du turbocompresseur x.

Le module M1 permet de déterminer la puissance adaptée $P_{adapt}$ qui est fonction de la puissance $P_{comp}$ envoyée au compresseur 3, de la pression $P_4$ en aval de la turbine 4, et de la température $T_3$ en amont de la turbine 4. Le module M2 permet de calculer la racine carrée de la température $T_3$.

Le module M3 permet de déterminer le débit adapté $Q_{adapt}$ qui est fonction du débit de gaz d'échappement $Q_{ech}$, de la pression $P_4$ en aval de la turbine 4, et de la température $T_3$ en amont de la turbine 4.

Le module M4 détermine la position de consigne du turbocompresseur Cons_pos_turb à partir de la puissance adaptée $P_{adapt}$ et du débit adapté $Q_{adapt}$ précédemment déterminés.

La relation entre la position de consigne du turbocompresseur et le couple puissance adaptée $P_{adapt}$-débit adapté $Q_{adapt}$ est obtenue à partir d'essais moteur ou à partir de données fonctionnelles de la turbine 4 fournies notamment par le fournisseur de turbocompresseur 2. Le turbocompresseur 2 est piloté en fonction de la position de consigne précédemment déterminée.

On fournit ci-après des exemples de caractérisation de turbine 4 à géométrie fixe (TGF) et à géométrie variable (TGV) issus de données fournisseur.

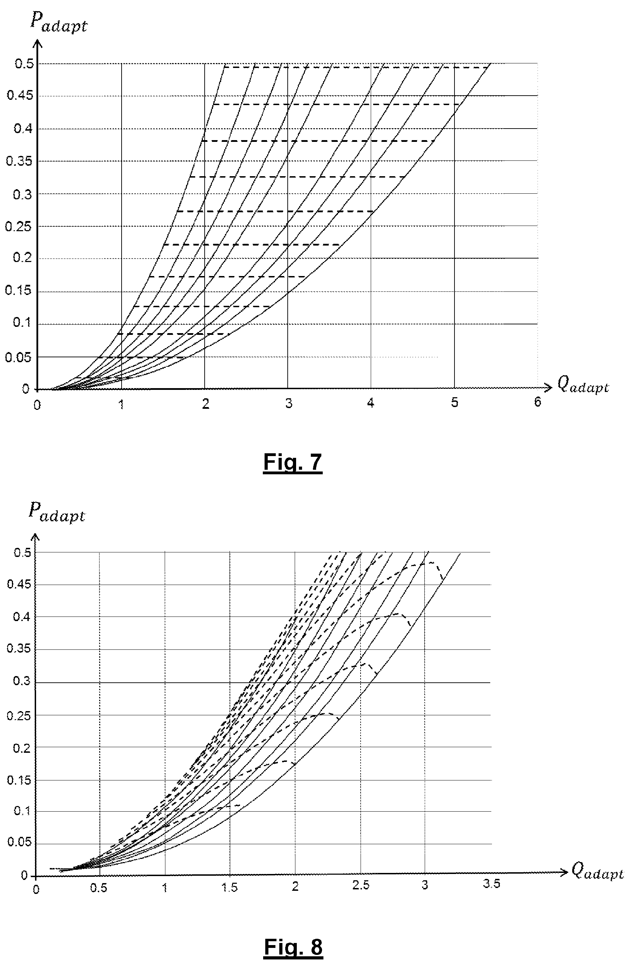

Les figures 7 et 8 montrent des courbes à iso-taux de détente de la turbine 4 (courbes en pointillés) et iso-position du turbocompresseur 2 dans un champ puissance adaptée $P_{adapt}$-débit adapté $Q_{adapt}$ pour un turbocompresseur 2 respectivement à géométrie fixe et à géométrie variable.

On observe que la position du turbocompresseur 2 est unique pour un couple $P_{adapt}$ / $Q_{adapt}$ donné, ce qui est cohérent avec les calculs détaillés dans les expressions (28) à (32).

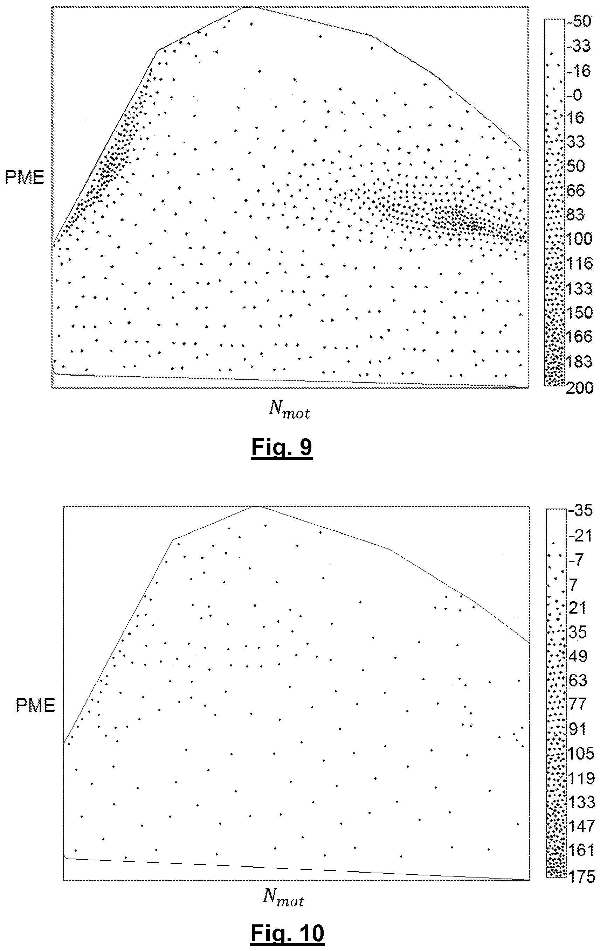

Les figures 9 et 10 sont des représentations graphiques de l'erreur de pression de suralimentation (PME) en fonction du point de fonctionnement régime-puissance $N_{mot}$ obtenue respectivement avec un procédé selon l'état de la technique et un procédé selon l'invention.

Il en ressort que l'erreur de pression de suralimentation varie de -50 à 200 mbar avec le procédé selon l'état de la technique, et varie de -35 à 35 mbar avec le procédé selon l'invention.

L'erreur de pression de suralimentation est ainsi plus réduite et centrée avec le procédé selon l'invention comparé au procédé selon l'état de la technique qui engendre une erreur hétérogène plus importante.

## Revendications

1. Procédé de calcul d'une position de consigne (Cons_pos_turb) d'un turbocompresseur (2) de moteur thermique (5) muni d'un compresseur (3) et d'une turbine (4) destinée à être entraînée par des gaz d'échappement, **caractérisé en ce que** ledit procédé comporte:

   - une étape de détermination d'une puissance adaptée $P_{adapt}$ déterminée à partir de la formule suivante:

$$P_{adapt} = \frac{P_{comp}}{P_4 \sqrt{T_3}}$$

   Avec $P_{comp}$ une puissance envoyée au compresseur; $P_4$ une pression en aval de la turbine; $T_3$ une température en amont de la turbine.
   - une étape de détermination d'un débit adapté $Q_{adapt}$ déterminé à partir de la formule suivante:

$$Q_{adapt} = Q_{ech} \frac{\sqrt{T_3}}{P_4}$$

   Avec : $Q_{ech}$ un débit de gaz d'échappement;
   - une étape de détermination de la position de consigne (Cons_pos_turb) du turbocompresseur (2) à partir de la puissance adaptée $P_{adapt}$ et du débit adapté $Q_{adapt}$, et
   - une étape de pilotage du turbocompresseur (2) en fonction de la position de consigne (Cons_pos_turb) précédemment déterminée.

2. Procédé selon la revendication 1, **caractérisé en ce qu'**une relation entre la position de consigne (Cons_pos_turb) du turbocompresseur (2) et un couple puissance adaptée $P_{adapt}$-débit adapté $Q_{adapt}$ est obtenue à partir d'essais moteur.

3. Procédé selon la revendication 1, **caractérisé en ce qu'**une relation entre la position de consigne (Cons_pos_turb) du turbocompresseur (2) et un couple puissance adaptée $P_{adapt}$-débit adapté $Q_{adapt}$ est obtenue à partir de données fonctionnelles de la turbine (4) du turbocompresseur (2).

4. Procédé selon l'une quelconque des revendications 1 à 3, **caractérisé en ce que** le turbocompresseur (2) comporte une turbine (4) à géométrie variable.

5. Procédé selon la revendication 4, **caractérisé en ce que** la position de consigne est la position de consigne des ailettes de la turbine (4).

6. Procédé selon l'une quelconque des revendications 1 à 3, **caractérisé en ce que** le turbocompresseur (2) comporte une turbine (4) à géométrie fixe.

7. Procédé selon la revendication 6, **caractérisé en ce que** la position de consigne est la position de consigne d'une soupape de décharge du turbocompresseur.

8. Calculateur moteur (26) comportant une mémoire stockant des instructions logicielles pour la mise en oeuvre du procédé de calcul d'une position de consigne (Cons_pos_turb) d'un turbocompresseur (2) de moteur thermique (5) tel que défini selon l'une quelconque des revendications précédentes.

9. Véhicule automobile **caractérisé en ce qu'**il comporte un calculateur moteur (26) tel que défini selon la revendication 8.

**Patentansprüche**

1. Verfahren zur Berechnung einer Sollposition ( Cons_pos_turb ) eines Turboladers (2) einer Wärmekraftmaschine (5), die mit einem Kompressor (3) und einer Turbine (4) ausgestattet ist, die durch Abgase angetrieben werden soll, **dadurch gekennzeichnet, dass** das Verfahren umfaßt:

   - einen Schritt zur Bestimmung einer geeigneten Leistung, $P_{adapt}$die anhand der folgenden Formel ermittelt wird:

$$P_{adapt} = \frac{P_{comp}}{P_4 \sqrt{T_3}}$$

   Mit $P_{comp}$ einer an den Kompressor gesendeten Leistung, ; $P_4$ einem Druck stromabwärts der Turbine ; $T_3$ und einer Temperatur stromaufwärts der Turbine.
   - einen Schritt zur Bestimmung einer geeigneten Durchflussrate $Q_{adapt}$ermittelt sich aus folgender Formel:

$$Q_{adapt} = Q_{ech} \frac{\sqrt{T_3}}{P_4}$$

   Mit $Q_{ech}$ Abgasströmung;
   - einen Schritt des Bestimmens der Sollposition ( Cons_pos_turb ) des Turboladers (2) aus der angepassten Leistung $P_{adapt}$und dem angepassten Durchfluss $Q_{adapt}$,

   Und
   zuvor bestimmten Sollposition ( Cons_pos_turb ) .

2. Verfahren nach einem der Ansprüche 1, **dadurch gekennzeichnet, dass** aus Motorversuchen ein Zusammenhang zwischen der Sollposition ( Cons_pos_turb ) des Turboladers (2) und einem angepassten leistungsangepassten Strömungspaar $Q_{adapt}$ gewonnen wird.$P_{adapt}$

3. Verfahren nach einem der Ansprüche 1, **dadurch gekennzeichnet, dass** aus Funktionsdaten der Turbine (4) des Turboladers ein Zusammenhang zwischen der Sollposition ( Cons_pos_turb ) des Turboladers (2) und einem angepassten leistungsadaptierten $P_{adapt}$Strömungspaar gewonnen wird ( $Q_{adapt}$ 2).

4. Verfahren nach einem der Ansprüche 1 bis 3, **dadurch gekennzeichnet, dass** der Turbolader (2) eine Turbine (4) mit variabler Geometrie umfasst.

5. Verfahren nach Anspruch 4, **dadurch gekennzeichnet, dass** die Sollposition die Sollposition der Schaufeln der Turbine (4) ist.

6. Verfahren nach einem der Ansprüche 1 bis 3, **dadurch gekennzeichnet, dass** der Turbolader (2) eine Turbine (4) mit fester Geometrie umfasst.

7. Verfahren nach Anspruch 6, **dadurch gekennzeichnet, dass** die Sollposition die Sollposition eines Auslassventils des Turboladers ist.

8. Motorcomputer (26), der einen Speicher umfasst, der Softwareanweisungen zum Implementieren des Verfahrens zum Berechnen einer Sollposition ( Cons_pos_turb ) eines Turboladers (2) eines Wärmemotors (5) gemäß einem der vorhergehenden Ansprüche speichert.

9. Kraftfahrzeug, **dadurch gekennzeichnet, dass** es einen Motorrechner (26) nach Anspruch 8 umfasst.

**Claims**

1. Method for calculating a set position ( Cons_pos_turb ) of a turbocharger (2) of a heat engine (5) provided with a compressor (3) and a turbine (4) intended to be driven by gases exhaust, **characterized in that** said method comprises:

   - a step of determining a suitable power $P_{adapt}$ determined from the following formula:

$$P_{adapt} = \frac{P_{comp}}{P_4\sqrt{T_3}}$$

   With $P_{comp}$ a power sent to the compressor; $P_4$ a pressure downstream of the turbine ; $T_3$ a temperature upstream of the turbine.
   - a step of determining a suitable flow rate $Q_{adapt}$ determined from the following formula:

$$Q_{adapt} = Q_{ech}\frac{\sqrt{T_3}}{P_4}$$

   With $Q_{ech}$ exhaust gas flow;
   - a step of determining the set position ( Cons_pos_turb ) of the turbocharger (2) from the adapted power $P_{adapt}$ and the adapted flow rate $Q_{adapt}$,
   And
   - a step of controlling the turbocharger (2) according to the set point position ( Cons_pos_turb ) previously determined .

2. Method according to any one of claims 1, **characterized in that** a relationship between the set position ( Cons_pos_turb ) of the turbocharger (2) and an adapted power - adapted flow $Q_{adapt}$ couple $P_{adapt}$ is obtained from engine tests.

3. Method according to any one of claims 1, **characterized in that** a relationship between the set position ( Cons_pos_turb ) of the turbocharger (2) and an adapted power $P_{adapt}$-adapted flow couple $Q_{adapt}$ is obtained from functional data of the turbine (4 ) of the turbocharger (2).

4. Method according to any one of claims 1 to 3, **characterized in that** the turbocharger (2) comprises a turbine (4) with variable geometry.

5. Method according to claim 4, **characterized in that** the set position is the set position of the blades of the turbine (4).

6. Method according to any one of claims 1 to 3, **characterized in that** the turbocharger (2) comprises a turbine (4) with fixed geometry.

7. Method according to claim 6, **characterized in that** the set position is the set position of a discharge valve of the turbocharger.

8. Engine computer (26) comprising a memory storing software instructions for implementing the method for calculating a set position ( Cons_pos_turb ) of a turbocharger (2) of a thermal engine (5) as defined according to any of the preceding claims.

9. Motor vehicle **characterized in that** it comprises an engine computer (26) as defined according to claim 8.

**Fig. 1**

**Fig. 2**

**Fig. 3**

**Fig. 4**

**Fig. 5**

**Fig. 6**

Fig. 7

Fig. 8

**Fig. 9**

**Fig. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102004051837 A1